(19) Europäisches Patentamt
European Patent Office
Office européen des brevets

(11) **EP 2 631 606 A2**

(12) **EUROPÄISCHE PATENTANMELDUNG**

(43) Veröffentlichungstag:
**28.08.2013 Patentblatt 2013/35**

(51) Int Cl.:
*G01D 5/34* (2006.01)　　*G01D 5/347* (2006.01)

(21) Anmeldenummer: **13153957.9**

(22) Anmeldetag: **05.02.2013**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(30) Priorität: **21.02.2012　DE 102012202660**

(71) Anmelder: **ROBERT BOSCH GMBH**
**70442 Stuttgart (DE)**

(72) Erfinder: **Schelling, Christoph**
**70597 Stuttgart (DE)**

(54) **Anordnung zur Erfassung von Drehwinkeln an einem rotierenden Bauteil**

(57)　Die Erfindung betrifft eine Anordnung (1) zur Messung von Drehwinkeln an einem rotierenden Bauteil (3) mit ersten Messmitteln (5), welche eine mit dem rotierenden Bauteil (3) gekoppelte erste Scheibe (32) mit zugehörigen Aufnehmern (34.1, 34.2) umfassen, welche in Abhängigkeit von der Rotationsbewegung des rotierenden Bauteils (3) sich wiederholende Feinsignale liefern, welche zur Bestimmung einer Winkelposition des rotierenden Bauteils (3) auswertbar sind, und mit zweiten Messmitteln (7) zur Erzeugung von Grobsignalen, welche zur Ermittlung der Anzahl der Umdrehungen des rotierenden Bauteils (3) auswertbar sind. Erfindungsgemäß sind die ersten Messmittel (5) als optisches Messsystem ausgebildet, welches mindestens zwei Feinmesskanäle (K1, K2), welche jeweils einen Lichtsender (24.1, 24.2) und einen als Lichtdetektor (34.1, 34.2) ausgeführten Aufnehmer aufweisen, und eine im Strahlungsweg der mindestens zwei Feinmesskanäle (K1, K2) angeordnete als Analysatorrad mit Polarisationsfilter ausgeführte erste Scheibe (32, 32') umfasst, wobei die mindestens zwei Feinmesskanäle (K1, K2) polarisiertes Licht mit unterschiedlichen Polarisationsebenen durch die als Analysatorrad mit Polarisationsfilter ausgeführte erste Scheibe (32, 32') führen.

Fig. 1

EP 2 631 606 A2

**Beschreibung**

Stand der Technik

Die Erfindung geht aus von einer Anordnung zur Erfassung von Drehwinkeln an einem rotierenden Bauteil nach der Gattung des unabhängigen Patentanspruchs 1.

Bei dem bekannten Lenkwinkelsensor wird ein Zählrad zur Bestimmung der Anzahl der Umdrehungen des Lenkrades berührungslos mittels Magnetfeldsensoren abgetastet. Solche Lenkwinkelsensoren können auf einem magnetischen Nonius-Prinzip basieren, welches zwei Zahnräder mit Zahnkränzen verwendet, deren Zahnanzahl sich um einen Zahn unterscheidet. Ein derartiges System hat den Nachteil, dass bei ausgeschalteter Zündung ein Ruhestrom bereitgestellt werden muss, um ein Verdrehen des Lenkrades bei ausgeschalteter Zündung erkennen zu können. Bei dauerhafter Nichtbenutzung des Fahrzeuges führt dies zu einer unerwünschten Entleerung der Fahrzeugbatterie. Wird ein solcher Ruhestrom nicht bereitgestellt, kann der Lenkwinkel nicht mehr eindeutig bestimmt werden, wenn ein Verdrehen des Lenkrades bei ausgeschalteter Zündung oder abgeklemmter Batterie erfolgt.

In der Offenlegungsschrift DE 44 09 892 A1 wird beispielsweise ein Sensor zur Erfassung des Lenkwinkels beschrieben. Der beschriebene Sensor umfasst eine erste Codescheibe, welche von einer Anzahl von Aufnehmern abgetastet wird und sich mit derselben Geschwindigkeit wie das Lenkrad dreht, und eine zweite Codescheibe, welche sich mit einem Viertel der Geschwindigkeit der ersten Codescheibe dreht und drei Codespuren aufweist, welche von entsprechenden Aufnehmern abgetastet werden. Durch geeignete Verknüpfung der so erzeugten Fein- und Grobsignale kann eine eindeutige Winkelbestimmung durchgeführt werden. Als Aufnehmer werden beispielsweise Magnethallsensoren eingesetzt.

Offenbarung der Erfindung

Die erfindungsgemäße Anordnung zur Erfassung von Drehwinkeln an einem rotierenden Bauteil mit den Merkmalen des unabhängigen Patentanspruchs 1 ermöglicht durch weniger mechanische Komponenten in vorteilhafter Weise eine vereinfachte, kostengünstige Erfassung eines Drehwinkels. Des Weiteren steht der aktuelle Drehwinkel direkt nach der ersten Lichtintensitätsmessung fest, so dass eine "true power on"- Fähigkeit zur Verfügung gestellt werden kann. Zudem nehmen Ausführungsformen der vorliegenden Anordnung zur Erfassung von Drehwinkeln an einem rotierenden Bauteil nur eine geringe elektrische Leistung auf und ermöglichen eine hohe Genauigkeit, da weniger mechanische Toleranzen berücksichtigt werden müssen.

Ausführungsformen der vorliegenden Erfindung stellen eine Anordnung zur Messung von Drehwinkeln an einem rotierenden Bauteil zur Verfügung, welche erste Messmittel, welche eine mit dem rotierenden Bauteil gekoppelte erste Scheibe mit zugehörigen Aufnehmern umfassen, welche in Abhängigkeit von der Rotationsbewegung des rotierenden Bauteils sich wiederholende Feinsignale liefern, welche zur Bestimmung einer Winkelposition des rotierenden Bauteils auswertbar sind, und zweite Messmittel zur Erzeugung von Grobsignalen umfasst, welche zur Ermittlung der Anzahl der Umdrehungen des rotierenden Bauteils auswertbar sind. Erfindungsgemäß sind die ersten Messmittel als optisches Messsystem ausgebildet, welches mindestens zwei Feinmesskanäle, welche jeweils einen Lichtsender und einen als Lichtdetektor ausgeführten Aufnehmer aufweisen, und eine im Strahlungsweg der mindestens zwei Feinmesskanäle angeordnete als Analysatorrad mit Polarisationsfilter ausgeführte erste Scheibe umfasst, wobei die mindestens zwei Feinmesskanäle polarisiertes Licht mit unterschiedlichen Polarisationsebenen durch die als Analysatorrad mit Polarisationsfilter ausgeführte erste Scheibe führen.

Ausführungsformen der erfindungsgemäßen Anordnung zur Erfassung von Drehwinkeln an einem rotierenden Bauteil können beispielsweise zur Bestimmung eines Lenkwinkeleinschlages bzw. einer Pedalstellung in einem Kraftfahrzeug eingesetzt werden.

Durch die in den abhängigen Ansprüchen aufgeführten Maßnahmen und Weiterbildungen sind vorteilhafte Verbesserungen der im unabhängigen Patentanspruch 1 angegebenen Anordnung zur Erfassung von Drehwinkeln an einem rotierenden Bauteil möglich.

Besonders vorteilhaft ist, dass die als Analysatorrad mit Polarisationsfilter ausgeführte erste Scheibe eine vorgegebene Periodizität von vorzugsweise $\pi$ oder $2\pi$ aufweisen kann. Bei dem $\pi$-periodischen Analysatorrad sind die Filterlinien parallel zueinander und bei dem $2\pi$-periodischen Analysatorrad sind die Filterlinien jeweils um einen kleinen Winkel verdreht.

In vorteilhafter Ausgestaltung der erfindungsgemäßen Anordnung zur Erfassung von Drehwinkeln an einem rotierenden Bauteil können die zweiten Messmittel als optisches Messsystem mit mindestens einem Grobmesskanal ausgebildet werden, welcher einen Lichtsender und einen als Lichtdetektor ausgeführten Aufnehmer aufweist. Dadurch können alle physikalischen Größen zur Erfassung bzw. Ermittlung des Drehwinkels an einem rotierenden Bauteil in vorteilhafter Weise mit demselben Messprinzip ermittelt werden, so dass weniger Komponenten erforderlich sind. Zur Codierung der Anzahl der Umdrehungen des rotierenden Bauteils können die zweiten Messmittel eine mit dem rotierenden Bauteil gekoppelte Codierscheibe mit lichtdurchlässigen und lichtundurchlässigen Bereichen aufweisen, wobei die lichtdurchlässigen Bereiche mindestens einen lichtdurchlässigen Kreisringsektor aufweisen, welcher im Strahlungsbereich des mindestens einen Grobmesskanals wirkt und von diesem abtastbar ist. Durch eine geeignete Wahl und Anzahl der lichtdurchlässigen Kreisringsektoren in der Codierscheibe kann Grobumdrehungszahl des rotierenden Bauteils bestimmt werden. Des Weiteren kann die Codierscheibe mit lichtdurchlässigen und lichtundurchlässigen Bereichen über einen Getriebemechanismus mit dem rotierenden Bauteil gekoppelt werden, wobei der Getriebemechanismus eine vorgegebene Übersetzung von vorzugsweise 1:8 oder 1:16 aufweisen kann. Dadurch kann die Winkeländerung des rotierenden Bauteils für die Umdrehungszahlmessung je nach gewählter Periodizität des Analysatorrades in eine kleinere Winkeländerung übersetzt werden. Gleichzeitig kann die Rotationsbewegung des rotierenden Bauteils im Verhältnis 1:1 oder auch 1:2 auf das Analysatorrad übertragen werden, mit dem die Feinmessung erfolgt. Alternativ kann die Anzahl der Umdrehungen des rotierenden Bauteils als Abstandsänderung zwischen dem Lichtsender und dem Lichtdetektor des mindestens einen Grobmesskanals ermittelt werden, wobei die Rotation des rotierenden Bauteils in eine Linearbewegung des Lichtdetektors des mindestens einen Grobmesskanals umgewandelt wird, und wobei die Abstandsänderung über eine Intensitätsmessung ermittelt werden kann. Die lineare Verschiebung des Lichtdetektors kann beispielsweise durch einen Schneckenmechanismus durchgeführt werden. Bei der Ermittlung der Abstandsänderung kann der Umstand ausgenutzt werden, dass die Lichtintensität einer punktförmigen Lichtquelle quadratisch mit dem Abstand von der Quelle abnimmt. Über die Unterschiede in der Lichtintensität bei verschiedenen Abständen/Umdrehungen kann dann die Anzahl der Umdrehungen des rotierenden Bauteils ermittelt werden.

In weiterer vorteilhafter Ausgestaltung der erfindungsgemäßen Anordnung zur Erfassung von Drehwinkeln an einem rotierenden Bauteil können die einzelnen Lichtsender der Messkanäle als optische Auskoppeleinrichtungen ausgeführt werden, welche von einer gemeinsamen unpolarisierten Lichtquelle gespeist werden können. Dadurch kann die Fehleranfälligkeit des Systems durch Degradation der verwendeten Lichtquellen in vorteilhafter Weise vermindert werden, da statt mehrerer Lichtquelle nur eine Lichtquelle eingesetzt wird, deren Licht beispielsweise in einem Lichtwellenleiter auf mehrere Messkanäle aufgeteilt wird. Zudem kann ein Referenzmesskanal mit einem Referenzlichtsender und einem Referenzdetektor vorgesehen werden, welcher einen Referenzwert für die Lichtintensität ermittelt und zur Verfügung stellt. Über diese Referenzmessung kann dann eine Intensitätsabnahme festgestellt und bei der weiteren Signalverarbeitung bzw. Signalauswertung berücksichtigt werden. Zudem kann eine entsprechende optische und/oder akustische Warn- bzw. Fehleranzeige ausgegeben werden. Des Weiteren kann zur Erzeugung von polarisiertem Licht mit unterschiedlichen Polarisationsebenen ein Strahlungsweg eines ersten Feinmesskanals durch eine Polarisationsscheibe mit einer ersten Polarisationsebene beeinflusst werden, und ein Strahlungsweg eines zweiten Feinmesskanals durch eine Polarisationsscheibe mit einer zweiten Polarisationsebene beeinflusst werden, wobei die zweite Polarisationsebene einen Verdrehungswinkel von vorzugsweise zur ersten Polarisationsebene aufweist.

In weiterer vorteilhafter Ausgestaltung der erfindungsgemäßen Anordnung zur Erfassung von Drehwinkeln an einem rotierenden Bauteil kann ein erster Lichtsender eines ersten Feinmesskanals polarisiertes Licht in einer ersten Polarisationsebene senden, und ein zweiter Lichtsender eines zweiten Feinmesskanals kann polarisiertes Licht in einer zweiten Polarisationsebene senden, wobei die zweite Polarisationsebene einen Verdrehungswinkel von vorzugsweise 45° zur ersten Polarisationsebene aufweist.

Der Intensitätsverlauf ist nahe Minimum und Maximum sehr flach, so dass die Winkelauflösung in diesen Bereichen gering ist. Durch die Verdrehung der Polarisationsebenen zwischen den beiden Feinmesskanälen um einen Winkel von vorzugsweise 45° befindet sich ein zweiter Feinmesskanal in einem Bereich mit besonders hoher Steigung und guter Winkelauflösung, während sich ein erster Feinmesskanal im Bereich mit schlechter Winkelauflösung befindet, so dass bei der Verwendung von zwei Feinmesskanälen mit unterschiedlichen Polarisationsebenen zu jedem Zeitpunkt eine gute Winkelauflösung erzielt werden kann. Außerdem wird die Feinwinkelmessung durch die kombinierte Messung zweier polarisierter Feinmesskanäle in einem Winkelbereich von 180° eindeutig. Um über einen Winkelbereich von 360° eine Eindeutigkeit der Feinwinkelmessung zu erzielen, kann entweder die Lenkradwinkelbewegung im Verhältnis 1:2 auf das Analysatorrad übersetzt werden oder ein $2\pi$-periodisches Analysatorrad eingesetzt werden.

Ausführungsbeispiele der Erfindung sind in den Zeichnungen dargestellt und werden in der nachfolgenden Beschreibung näher erläutert. In den Zeichnungen bezeichnen gleiche Bezugszeichen Komponenten bzw. Elemente, die gleiche bzw. analoge Funktionen ausführen.

Kurze Beschreibung der Zeichnungen

Fig. 1 zeigt eine schematische Darstellung eines Ausführungsbeispiels einer erfindungsgemäßen Anordnung zur Messung von Drehwinkeln an einem rotierenden Bauteil.

Fig. 2 zeigt eine schematische Darstellung eines $\pi$-periodischen Analysatorrades für die erfindungsgemäße Anordnung zur Messung von Drehwinkeln an einem rotierenden Bauteil aus Fig. 1.

Fig. 3 zeigt eine schematische Darstellung eines $2\pi$-periodischen Analysatorrades für die erfindungsgemäße Anordnung zur Messung von Drehwinkeln an einem rotierenden Bauteil aus Fig. 1.

Fig. 4 zeigt messbare Lichtintensitäten zweier polarisierten Feinmesskanäle mit um 45° gegeneinander verdrehten Polarisationsebenen in Abhängigkeit der Winkelstellung eines $\pi$-periodischen Analysatorrades bei einer vollen Umdrehung des rotierenden Bauteils.

Fig. 5 zeigt messbare Lichtintensitäten zweier polarisierten Feinmesskanäle mit um 45° gegeneinander verdrehten Polarisationsebenen in Abhängigkeit der Winkelstellung eines $2\pi$-periodischen Analysatorrades bei einer vollen Umdrehung des rotierenden Bauteils.

Fig. 6 zeigt eine messbare Lichtintensität in Abhängigkeit des Abstandes von Lichtsender und Lichtdetektor eines Grobmesskanals.

Ausführungsformen der Erfindung

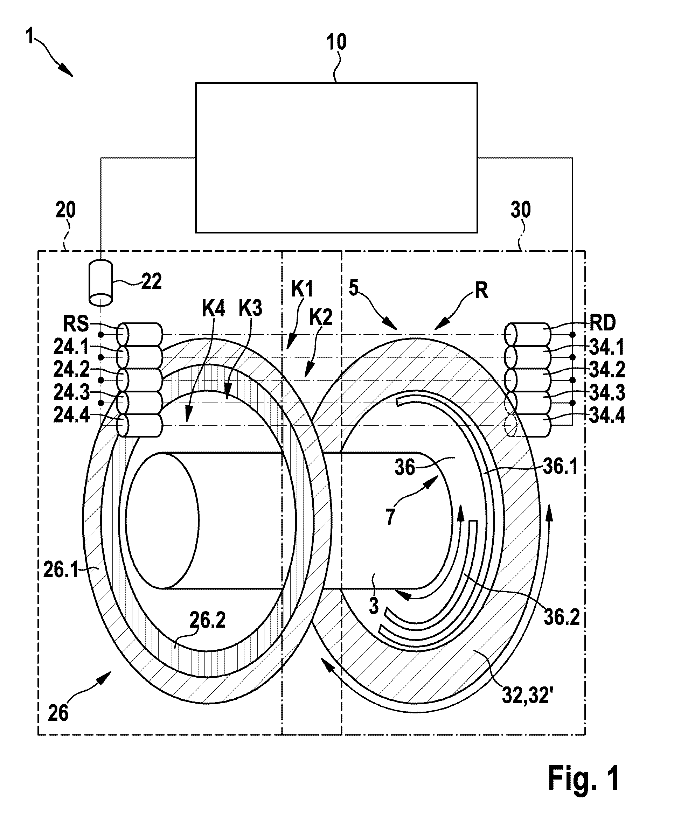

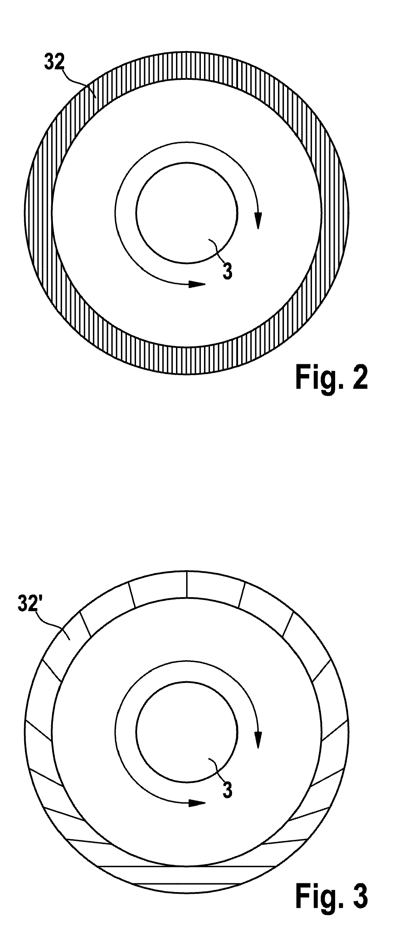

Wie aus Fig. 1 bis 3 ersichtlich ist, umfasst das dargestellte Ausführungsbeispiel einer erfindungsgemäßen Anordnung 1 zur Erfassung von Drehwinkeln an einem rotierenden Bauteil 3 erste Messmittel 5, welche eine mit dem rotierenden Bauteil 3 gekoppelte erste Scheibe 32 mit zugehörigen Aufnehmern 34.1, 34.2 umfassen, welche in Abhängigkeit von der Rotationsbewegung des rotierenden Bauteils 3 sich wiederholende Feinsignale liefern, welche zur Bestimmung einer Winkelposition des rotierenden Bauteils 3 von einer Auswerte- und Steuereinheit 10 ausgewertet werden, und zweite Messmittel 7 zur Erzeugung von Grobsignalen, welche zur Ermittlung der Anzahl der Umdrehungen des rotierenden Bauteils 3 von der Auswerte- und Steuereinheit 10 ausgewertet werden. Erfindungsgemäß sind die ersten Messmittel 5 als optisches Messsystem ausgebildet, welches mindestens zwei Feinmesskanäle K1, K2, welche jeweils einen Lichtsender 24.1, 24.2 und einen als Lichtdetektor 34.1, 34.2 ausgeführten Aufnehmer aufweisen, und eine im Strahlungsweg der mindestens zwei Feinmesskanäle K1, K2 angeordnete als Analysatorrad mit Polarisationsfilter ausgeführte erste Scheibe 32, 32' umfasst, wobei die mindestens zwei Feinmesskanäle K1, K2 polarisiertes Licht mit unterschiedlichen Polarisationsebenen durch die als Analysatorrad mit Polarisationsfilter ausgeführte erste Scheibe 32, 32'führen. Im dargestellten Ausführungsbeispiel sind zwei Feinmesskanäle K1, K2 zur Erzeugung von Feinsignalen vorgesehen, welche von der Auswerte- und Steuereinheit 10 zur Ermittlung des Drehwinkels des rotierenden Bauteils 3 ausgewertet werden. Die als Analysatorrad mit Polarisationsfilter ausgeführte erste Scheibe 32, 32' kann eine vorgegebene Periodizität von vorzugsweise $\pi$ oder $2\pi$ aufweisen. Fig. 2 zeigt eine $\pi$-periodische Ausführungsform der als Analysatorrad mit Polarisationsfilter ausgeführten ersten Scheibe 32, und Fig. 3 zeigt eine $2\pi$-periodische Ausführungsform der als Analysatorrad mit Polarisationsfilter ausgeführten ersten Scheibe 32'.

Wie aus Fig. 1 weiter ersichtlich ist, sind die zweiten Messmittel 7 ebenfalls als optisches Messsystem mit mindestens einem Grobmesskanal K3, K4 ausgebildet, welcher einen Lichtsender 24.3, 24.4 und einen als Lichtdetektor 34.3, 34.4 ausgeführten Aufnehmer aufweist. Im dargestellten Ausführungsbeispiel sind zwei Grobmesskanäle K3, K4 zur Erzeugung von Grobsignalen vorgesehen, welche von der Auswerte- und Steuereinheit 10 zur Ermittlung der Anzahl der Umdrehungen des rotierenden Bauteils 3 ausgewertet werden.

Des Weiteren umfassen die zweiten Messmittel 7 zur Codierung der Anzahl der Umdrehungen des rotierenden Bauteils 3 eine mit dem rotierenden Bauteil 3 gekoppelte Codierscheibe 36 mit lichtdurchlässigen und lichtundurchlässigen Bereichen. Im dargestellten Ausführungsbeispiel weisen die lichtdurchlässigen Bereiche zwei lichtdurchlässige Kreisringsektoren 36.1, 36.2 auf. Hierbei wirkt ein erster lichtdurchlässiger Kreisringsektor 36.1 im Strahlungsbereich eines ersten Grobmesskanals K3 und wird vom ersten Grobmesskanal K3 abgetastet. Ein zweiter lichtdurchlässiger Kreisringsektor 36.2 wirkt im Strahlungsbereich eines zweiten Grobmesskanals K4 und wird vom zweiten Grobmesskanal K4 abgetastet. Des Weiteren kann die Codierscheibe 36 mit lichtdurchlässigen und lichtundurchlässigen Bereichen über einen nicht dargestellten Getriebemechanismus mit dem rotierenden Bauteil 3 gekoppelt werden, welcher eine vorgegebenen Übersetzung, von vorzugsweise 1:8 oder 1:16 aufweist.

Wie aus Fig. 1 weiter ersichtlich ist, umfasst die Anordnung 1 zur Erfassung von Drehwinkeln an einem rotierenden Bauteil 3 eine Lichterzeugungseinheit 20 und eine Detektionseinheit 30. Die Lichterzeugungseinheit 20 umfasst mehrere als optische Auskoppeleinrichtungen ausgeführte Lichtsender 24.1 bis 24.4, RS, welche von einer gemeinsamen unpolarisierten Lichtquelle 22 gespeist werden. Die Detektionseinheit 30 umfasst mehrere Lichtdetektoren 34.1 bis 34.4, RD, welche das von den Lichtsendern 24.1 bis 24.4, RS abgestrahlte Licht empfangen. Wie aus Fig. 1 weiter ersichtlich ist, sind ein erster Lichtsender 24.1 und ein erster Lichtdetektor 34.1 einem ersten Feinmesskanal K1 zugeordnet, ein zweiter Lichtsender 24.2 und ein zweiter Lichtdetektor 34.2 sind einem zweiten Feinmesskanal K1 zugeordnet, ein dritter Lichtsender 24.3 und ein dritter Lichtdetektor 34.3 sind dem ersten Grobmesskanal K3 zugeordnet, und ein vierter Lichtsender 24.4 und ein vierter Lichtdetektor 34.4 sind dem zweiten Grobmesskanal K4 zugeordnet. Zudem ist ein Referenzmesskanal R mit einem Referenzlichtsender RS und einem Referenzdetektor RD vorgesehen, welcher einen Referenzwert für die Lichtintensität ermittelt und zur Verfügung stellt. Die Auswerte- und Steuereinheit 10 wertet die mit den Lichtdetektoren 34.1 bis 34.4 erfassten Lichtintensitätswerte und den mit dem Referenzdetektor RD erfassten Referenzwert zur Ermittlung des Drehwinkels des rotierenden Bauteils 3 aus. Zur Vermeidung eines Übersprechens zwischen den einzelnen optischen Kanälen K1 bis K4 und R können Abschirmwände vorgesehen werden. Alternativ können die Kanäle in vorteilhafter Weise azimuthal über den gesamten Winkelbereich verteilt werden.

Wie aus Fig. 1 weiter ersichtlich ist, umfasst die Lichterzeugungseinheit 20 zur Erzeugung von polarisiertem Licht mit unterschiedlichen Polarisationsebenen eine Polarisationsscheibe 26 mit einer ersten Polarisationsebene 26.1, welche einen Strahlungsweg des ersten Feinmesskanals K1 beeinflusst, und mit einer zweiten Polarisationsebene 26.2, welche einen Strahlungsweg des zweiten Feinmesskanals K2 beeinflusst. Hierbei weist die zweite Polarisationsebene 26.2 einen Verdrehungswinkel φ von vorzugsweise 45° zur ersten Polarisationsebene 26.1 auf.

Alternativ kann die Lichterzeugungseinheit 20 für die beiden Feinmesskanäle K1, K2 Lichtsender aufweisen, welche direkt polarisiertes Licht erzeugen und aussenden. Hierbei kann einen erster Lichtsender des ersten Feinmesskanals K1 polarisiertes Licht in einer ersten Polarisationsebene 26.1 senden und ein zweiter Lichtsender des zweiten Feinmesskanals K2 kann polarisiertes Licht in einer zweiten Polarisationsebene 26.2 senden, wobei die zweite Polarisationsebene 26.2 einen Verdrehungswinkel φ von vorzugsweise 45° zur ersten Polarisationsebene 26.1 aufweist.

Ausführungsformen der erfindungsgemäßen Anordnung 1 zur Erfassung von Drehwinkeln an einem rotierenden Bauteil 3 können in einem Kraftfahrzeug beispielsweise zur Bestimmung eines Lenkwinkeleinschlages bzw. einer Gaspedalstellung verwendet werden.

Bei der Anwendung als Lenkwinkelsensor erfasst die erfindungsgemäße Anordnung 1 die aktuelle Stellung des Lenkrades über einen Winkelbereich von ca. 1.500° eindeutig auf ca. 4° genau. Zur Erfassung der Winkeländerung des Lenkrades wird die Rotationsbewegung des rotierenden Bauteils 3 für die Umdrehungszahlmessung je nach gewählter Periodizität des Analysatorrades 32, 32' über den nicht dargestellten Getriebemechanismus in einem Verhältnis zwischen 1:8 und 1:16 in eine kleinere Winkeländerung auf die Codierscheibe 36 übersetzt. Gleichzeitig wird die Rotation des rotierenden Bauteils 3 im Verhältnis 1:1 oder auch 1:2 auf das Analysatorrad 32, 32' übertragen, mit dem die Feinwinkelmessung durchgeführt wird. Durch eine geeignete Wahl und Anordnung der lichtdurchlässigen Kreisringsektoren 36.1, 36.2 in der Codierscheibe 36 erfolgt die Bestimmung der Grobumdrehungszahl des rotierenden Bauteils 3 bzw. des Lenkrades durch die Auswerte- und Steuereinheit 10.

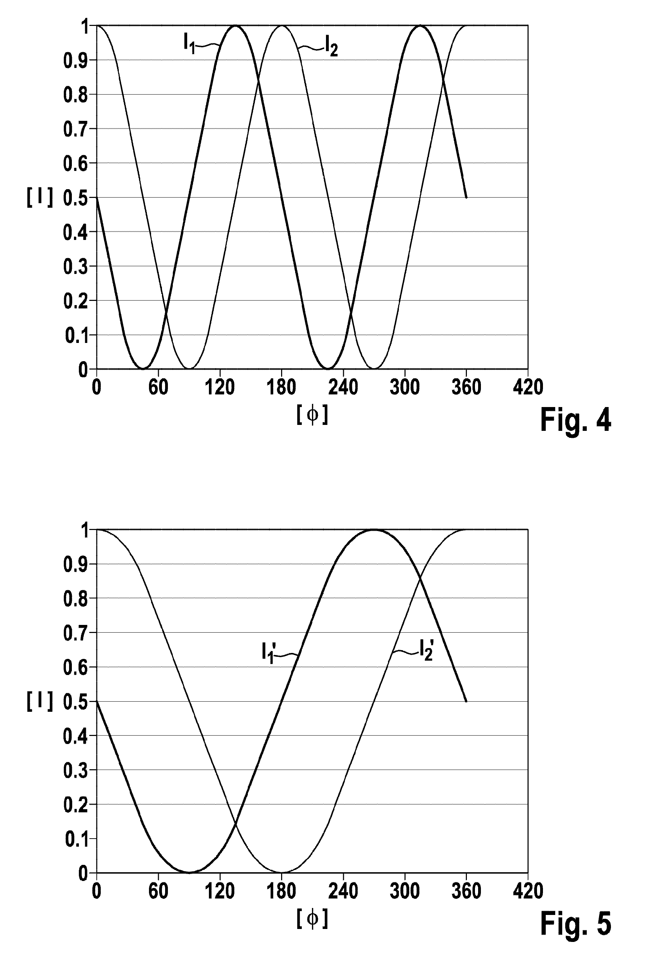

Wie aus Fig. 4 und 5 ersichtlich ist, variiert eine hinter dem Analysatorrad 32 messbare erste Lichtintensität $I_1$, $I_1'$ des polarisierten Lichtsignals des ersten Feinmesskanals K1 in Abhängigkeit von der Winkelstellung $\phi$ des Analysatorrades 32, 32' zur ersten Polarisationsebene 26.1 und der Ausgangsintensität $I_{pol}$ des ersten Lichtsenders 24.1 nach Gleichung (1): 
$$I_1, I_1' = I_{pol} * \cos^2(\phi) \qquad (1)$$

Für den zweiten Feinmesskanal K2 mit der um den Winkel φ verdrehten zweiten Polarisationsebene 26.2 und demselben Analysatorrad 32, 32' ergibt sich die zweite Lichtintensität $I_2$, $I_2'$ des polarisierten Lichtsignals nach Gleichung (2): 
$$I_2, I_2' = I_{pol} * \cos^2(\phi + \varphi) \qquad (2)$$

Wie aus Fig. 4 weiter ersichtlich ist, sind diese Funktionen für die erste und zweite Lichtintensität $I_1$, $I_2$ bei einem "normalen" π-periodischen Analysatorrad 32 zunächst jeweils π-periodisch und für jeden Funktionswert existieren vier korrespondierende Winkelwerte $\phi$. Für Verdrehungswinkel $\varphi \neq n *90°$ kann diese Mehrdeutigkeit durch Auswertung des Summensignals $I_1+I_2$ oder des Differenzsignals $I_1-I_2$ der ersten und zweiten Lichtintensität $I_1$, $I_2$ herangezogen werden, worauf im Winkelbereich von 0° bis 360° nur noch zwei Winkelwerte denselben Funktionswert aufweisen. Wird die Rotation des Lenkrads bzw. des rotierenden Bauteils 3 im Verhältnis 1:2 auf das Analysatorrad 32 umgesetzt, dann lässt sich daraus ein eindeutiger Winkelwert bestimmen. Wie aus Fig. 5 weiter ersichtlich ist, kann alternativ ein spezielles 2π-periodisches Analysatorrad 32' eingesetzt werden, welches die dargestellte erste und zweite Lichtintensität $I_1'$, $I_2'$ bewirkt.

In vorteilhafter Weise wird die Verdrehung der zweiten Polarisationsebene 26.2 des zweiten Feinmesskanals K2 zur ersten Polarisationsebene 26.1 des ersten Feinmesskanals K1 mit einem Winkel φ=45° vorgegeben. Der Intensitätsverlauf ist nahe dem Minimum und dem Maximum der Kennlinien sehr flach, so dass die Winkelauflösung in diesem Bereichen schlecht ist. Ist die zweite Polarisationsebene 26.2 um einen Winkel φ=45° zur ersten Polarisationsebene 26.1 verdreht, dann kann die Winkelauflösung im ersten Feinmesskanal K1 zwar schlecht sein, im korrespondierenden zweiten Feinmesskanal K2 ist die Winkelauflösung wegen der besonders hohen Steigung zum selben Zeitpunkt jedoch besonders gut, so dass die zugehörige Winkelstellung $\phi$ des rotierenden Bauteils 3 genau ermittelt werden kann. Außerdem wird die Feinwinkelmessung durch die kombinierte Messung zweier polarisierter Feinmesskanäle K1, K2 damit auf einen Winkelbereich von 180° eindeutig. Um für eine Eindeutigkeit der Feinwinkelmessung über einen Winkelbereich von 360° zu sorgen sollte entweder die Lenkradwinkelbewegung im Verhältnis 1:2 auf das π-periodische Analysatorrad 32' übersetzt werden oder ein spezielles $2\pi$-periodisches Analysatorrad 32' eingesetzt werden.

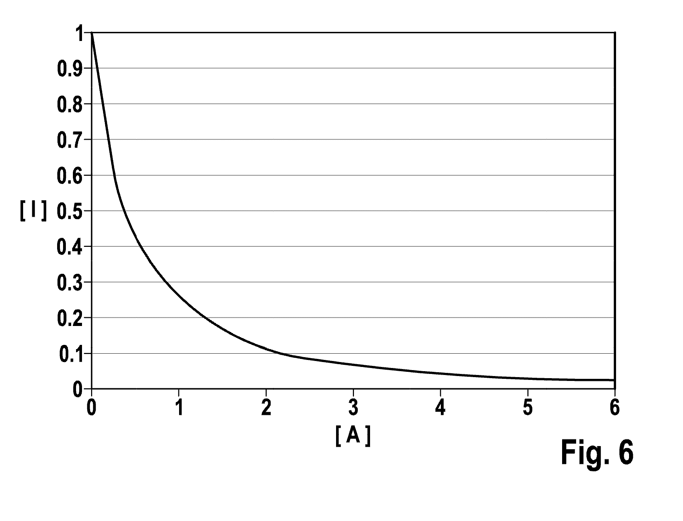

Als Alternative zur Messung der Umdrehungsanzahl A durch die Codierscheibe 36 kann die Anzahl der Umdrehungen A des rotierenden Bauteils 3 als Abstandsänderung zwischen dem Lichtsender 24.3, 24.4 und dem korrespondierenden Lichtdetektor 34.3, 34.4 des mindestens einen Grobmesskanals K3, K4 ermittelt werden. Hierbei wird die Rotation des rotierenden Bauteils 3 in eine Linearbewegung des Lichtdetektors 34.3, 34.4 des mindestens einen Grobmesskanals K3, K4 umgewandelt und die Abstandsänderung wird über eine Intensitätsmessung ermittelt. Wie aus Fig. 6 ersichtlich ist, nimmt die Lichtintensität einer punktförmigen Lichtquelle quadratisch mit dem Abstand von der Lichtquelle ab. Über die Unterschiede in der Lichtintensität bei verschiedenen Abständen/Umdrehungen lässt sich die Anzahl der Umdrehungen A ermitteln.

**Patentansprüche**

1. Anordnung zur Messung von Drehwinkeln an einem rotierenden Bauteil (3) mit ersten Messmitteln (5), welche eine mit dem rotierenden Bauteil (3) gekoppelte erste Scheibe (32) mit zugehörigen Aufnehmern (34.1, 34.2) umfassen, welche in Abhängigkeit von der Rotationsbewegung des rotierenden Bauteils (3) sich wiederholende Feinsignale liefern, welche zur Bestimmung einer Winkelposition des rotierenden Bauteils (3) auswertbar sind, und mit zweiten Messmitteln (7) zur Erzeugung von Grobsignalen, welche zur Ermittlung der Anzahl der Umdrehungen des rotierenden Bauteils (3) auswertbar sind, **dadurch gekennzeichnet, dass** die ersten Messmittel (5) als optisches Messsystem ausgebildet sind, welches mindestens zwei Feinmesskanäle (K1, K2), welche jeweils einen Lichtsender (24.1, 24.2) und einen als Lichtdetektor (34.1, 34.2) ausgeführten Aufnehmer aufweisen, und eine im Strahlungsweg der mindestens zwei Feinmesskanäle (K1, K2) angeordnete als Analysatorrad mit Polarisationsfilter ausgeführte erste Scheibe (32, 32') umfasst, wobei die mindestens zwei Feinmesskanäle (K1, K2) polarisiertes Licht mit unterschiedlichen Polarisationsebenen durch die als Analysatorrad mit Polarisationsfilter ausgeführte erste Scheibe (32, 32') führen.

2. Anordnung nach Anspruch 1, **dadurch gekennzeichnet, dass** die als Analysatorrad mit Polarisationsfilter ausgeführte erste Scheibe (32, 32') eine vorgegebene Periodizität von vorzugsweise $\pi$ oder $2\pi$ aufweist.

3. Anordnung nach Anspruch 1 oder 2, **dadurch gekennzeichnet, dass** die zweiten Messmittel (7) als optisches Messsystem mit mindestens einem Grobmesskanal (K3, K4) ausgebildet sind, welcher einen Lichtsender (24.3, 24.4) und einen als Lichtdetektor (34.3, 34.4) ausgeführten Aufnehmer aufweist.

4. Anordnung nach Anspruch 3, **dadurch gekennzeichnet, dass** die zweiten Messmittel (7) zur Codierung der Anzahl der Umdrehungen des rotierenden Bauteils (3) eine mit dem rotierenden Bauteil (3) gekoppelte Codierscheibe (36) mit lichtdurchlässigen und lichtundurchlässigen Bereichen aufweist, wobei die lichtdurchlässigen Bereiche mindestens einen lichtdurchlässigen Kreisringsektor (36.1, 36.2) aufweisen, welcher im Strahlungsbereich des mindestens einen Grobmesskanals (K3, K4) wirkt und von diesem abtastbar ist.

5. Anordnung nach Anspruch 4, **dadurch gekennzeichnet, dass** die Codierscheibe (36) mit lichtdurchlässigen und lichtundurchlässigen Bereichen über einen Getriebemechanismus mit dem rotierenden Bauteil (3) gekoppelt ist, wobei der Getriebemechanismus eine vorgegebenen Übersetzung von vorzugsweise 1:8 oder 1:16 aufweist.

6. Anordnung nach Anspruch 3, **dadurch gekennzeichnet, dass** die Anzahl der Umdrehungen des rotierenden Bauteils (3) als Abstandsänderung zwischen dem Lichtsender (24.3, 24.4) und dem Lichtdetektor (34.3, 34.4) des mindestens einen Grobmesskanals (K3, K4) ermittelbar ist, wobei die Rotation des rotierenden Bauteils (3) in eine Linearbewegung des Lichtdetektors (34.3, 34.4) des mindestens einen Grobmesskanals (K3, K4) umwandelbar ist, und wobei die Abstandsänderung über eine Intensitätsmessung ermittelbar ist.

7. Anordnung nach einem der Ansprüche 1 bis 6, **dadurch gekennzeichnet, dass** mindestens zwei Lichtsender (24.1 bis 24.4, RS) der Messkanäle (R, K1 bis K4) als optische Auskoppeleinrichtungen ausgeführt sind, welche von einer gemeinsamen unpolarisierten Lichtquelle (22) gespeist sind.

8. Anordnung nach Anspruch 7, **dadurch gekennzeichnet, dass** ein Referenzmesskanal (R) mit einem Referenzlichtsender (RS) und einem Referenzdetektor (RD) vorgesehen ist, welcher einen Referenzwert für die Lichtintensität ermittelt und zur Verfügung stellt.

9. Anordnung nach Anspruch 7 oder 8, **dadurch gekennzeichnet, dass** zur Erzeugung von polarisiertem Licht mit unterschiedlichen Polarisationsebenen ein Strahlungsweg eines ersten Feinmesskanals (K1) durch eine Polarisationsscheibe (26) mit einer ersten Polarisationsebene (26.1) beeinflusst ist, und ein Strahlungsweg eines zweiten Feinmesskanals (K2) durch eine Polarisationsscheibe (26) mit einer zweiten Polarisationsebene (26.2) beeinflusst ist, wobei die zweite Polarisationsebene (26.2) einen Verdrehungswinkel ($\varphi$) von vorzugsweise 45° zur ersten Polarisationsebene (26.1) aufweist.

10. Anordnung nach einem der Ansprüche 1 bis 6, **dadurch gekennzeichnet, dass** ein erster Lichtsender eines ersten Feinmesskanals (K1) polarisiertes Licht in einer ersten Polarisationsebene (26.1) sendet und ein zweiter Lichtsender eines zweiten Feinmesskanals (K2) polarisiertes Licht in einer zweiten Polarisationsebene (26.2) sendet, wobei die zweite Polarisationsebene (26.2) einen Verdrehungswinkel ($\varphi$) von vorzugsweise 45° zur ersten Polarisationsebene (26.1) aufweist.

**Fig. 1**

**Fig. 2**

**Fig. 3**

Fig. 4

Fig. 5

Fig. 6

**IN DER BESCHREIBUNG AUFGEFÜHRTE DOKUMENTE**

**In der Beschreibung aufgeführte Patentdokumente**

- DE 4409892 A1